# EUROPÄISCHE PATENTSCHRIFT

(11) **EP 0 913 618 B1**
(45) Veröffentlichungstag und Bekanntmachung des Hinweises auf die Patenterteilung: **23.10.2002**
(21) Anmeldenummer: 98112025.6
(22) Anmeldetag: 30.06.1998
(51) Int. Cl.: F16L 37/088, F16L 37/084

(54) **Steckkupplung für Druckmittelsysteme**
Plug connector for pressure systems
Raccord emboitable pour systèmes sous pression

(30) Priorität: 29.10.1997 DE 29719247 U
(43) Veröffentlichungstag der Anmeldung: 06.05.1999
(73) Patentinhaber: Voss Automotive GmbH, 51688 Wipperfürth (DE)
(72) Erfinder: Hagen, Harald, 51688 Wipperfürth (DE); Berg, Manfred, 51688 Wipperfürth (DE); Kaminski, Volker, 58553 Halver (DE); Hester, Hilmar, 51688 Wipperfürth (DE)
(74) Vertreter: Zapf, Christoph, Dipl.-Ing.

(56) Entgegenhaltungen:
- EP-A- 0 748 975
- EP-A- 0 766 033
- DE-A- 19 621 535

## Beschreibung

Die vorliegende Erfindung betrifft eine Steckkupplung für Druckmittelsysteme, bestehend aus zwei Kupplungsteilen, und zwar einem Aufnahmeteil und einem Steckerteil, wobei das Steckerteil mit einem Steckerschaft umfangsgemäß abgedichtet in eine Aufnahmeöffnung des Aufnahmeteils in einer Steckrichtung einsteckbar und über ein in einer Ausnehmung des einen Kupplungsteils sitzendes Halteelement einerseits in einer teilgesteckten, unvollständig abgedichteten Vorraststellung und andererseits in einer ganz gesteckten, vollständig druckdicht abgedichteten Vollraststellung gegen Lösen arretierbar ist, wobei in den beiden Raststellungen Rastelemente des Halteelemntes jeweils unter Bildung einer Rastverbindung eine Rastkante des anderen Kupplungsteiles hintergreifen, wobei das erste Rastelement für die Vorraststellung und das zweite Rastelement für die Vollraststellung wirksam ist.

Druckmittel-Steckkupplungen werden beispielsweise in Kraftfahrzeug-Bremssystemen, insbesondere bei Lkw-Luftdruckbremsanlagen, eingesetzt. Unter anderem ist von der Anmelderin für diesen Einsatzzweck eine Steckkupplung in der deutschen Patentanmeldung DE 196 21 535 vorgeschlagen worden. Zur Vermeidung einer zunächst unbemerkten Fehlmontage, die dann bei Druckbeaufschlagung eine Trennung der Kupplung herbeiführen könnte, ist bei dieser Steckkupplung schon im noch nicht ganz korrekt gesteckten Zustand der Kupplungsteile eine "Vorrastung" gewährleistet, die es verhindert, daß bei Druckbeaufschlagung die Kupplung ganz getrennt wird. Dabei ist in dieser Vorraststellung eine erwünschte Undichtigkeit vorgesehen. Dieser Zustand ist bei Druckbeaufschlagung akustisch durch ein Leckgeräusch wahrnehmbar, ohne daß es jedoch zu einem vollständigen, plötzlichen Druckabfall kommen kann. Die Kupplung kann bei Auf-treten des Leckgeräusches weiter in die korrekt abgedichtete und arretierte 'Vollraststellung" überführt werden. Diese vorgeschlagene Steckkupplung zeichnet sich insbesondere dadurch aus, daß das Halteelement sowohl in der Vorraststellung als auch in Vollraststellung jeweils mit ein- und derselben Rastkante zusammenwirkt. Bevorzugterweise besteht das Halteelement dabei aus einem in der Ausnehmung des einen Kupplungsteils sitzenden Trägerelement und zwei in dem Trägerelement elastisch verformbar gehalterten und axial hintereinander angeordneten Rastelementen, wobei die Rastkante des zweiten Kupplungsteils in der Vorraststellung von dem ersten Rastelement und in der Vollraststellung von dem zweiten Rastelement hintergriffen wird.

Die EP 0 748 975 beschreibt eine Steckkupplung für Druckmittelsysteme nach dem Oberbegriff des Anspruchs 1, bestehend aus einem Gehäuseteil und einem Steckerteil. Eine Verriegelungseinrichtung ist derart ausgebildet, dass eine teilgesteckte Vorraststellung und eine ganz gesteckte Vollraststellung gewährleistet sind. Die Verriegelungseinrichtung besteht einerseits aus einem Doppelrastelement mit zwei axial benachbart in einer Innenringnut innerhalb einer Gehäuse-Aufnahmeöffnung oder in einer Aussenringnut am Steckerschaft gelagerten, elastisch verformbaren Halteelementen und andererseits aus einer Rastnut des Steckerschaftes oder der Gehäuse-Aufnahmeöffnung. In der Vorraststellung rastet zunächst nur das in Einsteckrichtung erste Halteelement bereichsweise in die Rastnut ein, und in der Vollraststellung greifen beide Halteelemente bereichsweise in die Rastnut ein.

Die bekannte Steckkupplung ist zwar einfach und preisgünstig herzustellen und hat sich hinsichtlich der Montage in der Praxis bewährt. Jedoch hat es sich gezeigt, daß hinsichtlich der Sicherheit der Steckverbindung im Betriebszustand, insbesondere hinsichtlich der Stabilität dieser Verbindung unter dem Einfluß von Druckschwankungen des Arbeitsmediums oder von Vibrationen, ein noch unausgeschöpftes Verbesserungspotential vorhanden ist.

Der vorliegenden Erfindung liegt daher die Aufgabe zugrunde, ausgehend von dem genannten Stand der Technik eine Steckkupplung zu schaffen, durch die ohne Einbuße der Montagevorteile der Steckkupplung eine noch höhere Betriebssicherheit bei auftretenden Druckschwankungen oder Vibrationen erreicht wird.

Erfindungsgemäß wird dies dadurch erreicht, dass das Halteelement derart ausgebildet und in der Ausnehmung des einen Kupplungsteils axial zur Steckrichtung relativbeweglich angeordnet ist, daß zumindest in der Vollraststellung mindestens ein Rastelement durch eine Verschiebung des Halteelementes entgegen der Steckrichtung aus einer ungesperrten Position, in der jeweils die Rastverbindung durch eine radiale Rückbewegung des Rastelementes aufhebbar ist, in eine gesperrte Position überführbar ist, in der jeweils die Aufhebung der Rastverbindung durch einen das Rastelement formschlüssig gegen die Rückbewegung sperrenden, ortsfesten Verriegelungsabschnitt unterbunden ist.

Hierdurch ist nicht nur die Herstellung bzw. Montage der erfindungsgemäßen Steckkupplung sehr einfach, sondern es wird erfindungsgemäß in der Vollraststellung (und optional auch in der Vorraststellung) eine höhere Betriebssicherheit bzw. Zuverlässigkeit der Rastverbindung(en) erreicht.

Im Gegensatz zum Gegenstand der vorgeschlagenen Steckkupplung mit einem ortsfesten "doppeltrastenden" Halteelement ist dieses Halteelement bei der Erfindung, insbesondere in axialer Richtung, ortsbeweglich in der - vorzugsweise als Innenringnut innerhalb des Aufnahmeteils - ausgebildeten Ausnehmung angeordnet, während zur formschlüssigen Unterbindung der Aufhebung der Rastverbindung mindestens ein mit dem Rastelement zusammenwirkender Verriegelungsabschnitt vorgesehen sein kann, der ortsfest zur Ausnehmung angeordnet ist.

Für die konstruktive Gestaltung eines Verriegelungsabschnittes ergeben sich eine Reihe von Möglichkeiten: Der Verriegelungsabschnitt kann z.B. Bestandteil des Kupplungsteils sein, in dem sich die Ausnehmung befindet. Er kann aber auch Bestandteil eines separaten, in der Ausnehmung angeordneten Verriegelungsteiles, insbesondere eines Ringteiles, sein, wodurch bei einer Demontage der Steckkupplung eine verbesserte Lösbarkeit erreicht werden kann.

Die formschlüssige Sperrung des Lösens der Rastverbindung durch Überführung der Rastelemente aus der ungesperrten in die gesperrte Position mittels einer Verschiebung des Halteelementes kann dabei, wie bereits erwähnt, mit Vorteil sowohl in der Vollraststellung als auch in der Vorraststellung vorgesehen sein.

Weitere vorteilhafte Ausgestaltungsmerkmale der Erfindung sind in den Unteransprüchen sowie der folgenden Beschreibung enthalten.

Anhand von mehreren in der Zeichnung dargestellten, bevorzugten Ausführungsbeispielen soll die Erfindung nun genauer erläutert werden. Dabei zeigen:
- Fig. 1: eine erste Ausführung einer erfindungsgemäßen Steckkupplung im Axialschnitt, wobei in der linken Figurenhälfte (Fig. 1a) die ganz gesteckte Vollraststellung und in der rechten Figurenhälfte (Fig. 1b) die teilgesteckte Vorraststellung, jeweils bei für die Aufhebung der Rastverbindung gesperrter Position, dargestellt sind,
- Fig. 2: in verkleinertem Maßstab gegenüber Fig. 1, in einer Figurenfolge 2a bis 2f einzelne Phasen des zeitlichen Ablaufs der Montage der in Fig. 1 dargestellten ersten Ausführung einer erfindungsgemäßen Steckkupplung,
- Fig. 3: ebenfalls im Axialschnitt, in einer Figurenfolge 3a bis 3d einzelne Phasen des zeitlichen Ablauf der Montage einer zweiten Ausführung einer erfindungsgemäßen Steckkupplung,
- Fig. 4: in einer Figurenfolge 4a, 4b zwei Phasen des zeitlichen Ablauf der Demontage der in Fig. 3 dargestellten zweiten Ausführung einer erfindungsgemäßen Steckkupplung,
- Fig. 5: im Axialschnitt, eine dritte Ausführung einer erfindungsgemäßen Steckkupplung bei Vollrastung, einesteils bei Vorliegen einer für das Lösen der Rastverbindung ungesperrten Position (Fig. 5a) und anderenteils bei Vorliegen einer gesperrten Position (Fig. 5b),
- Fig. 6: einen Ausschnitt einer im Axialschnitt dargestellten vierten Ausführung einer erfindungsgemäßen Steckkupplung,
- Fig. 7: zwei vorzugsweise alternative Ausführungsformen (Fig. 7a, 7b) des Halteelementes im Bereich der Einzelheit VII der vierten Ausführung der erfindungsgemäßen Steckkupplung nach Fig. 6.

In den verschiedenen Figuren der Zeichnung sind gleiche Teile stets mit denselben Bezugszeichen versehen und werden daher in der Regel auch jeweils nur einmal beschrieben.

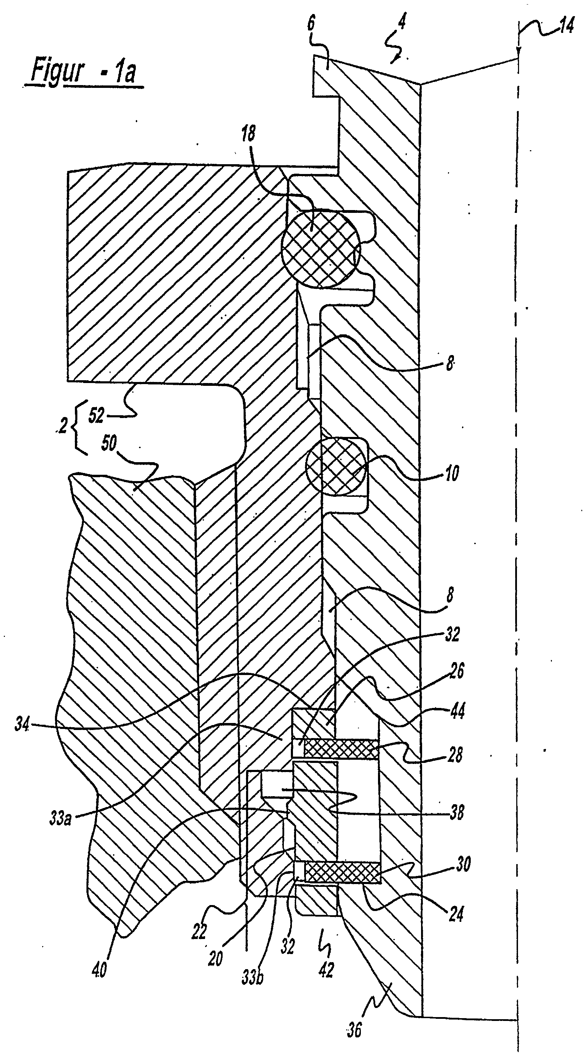

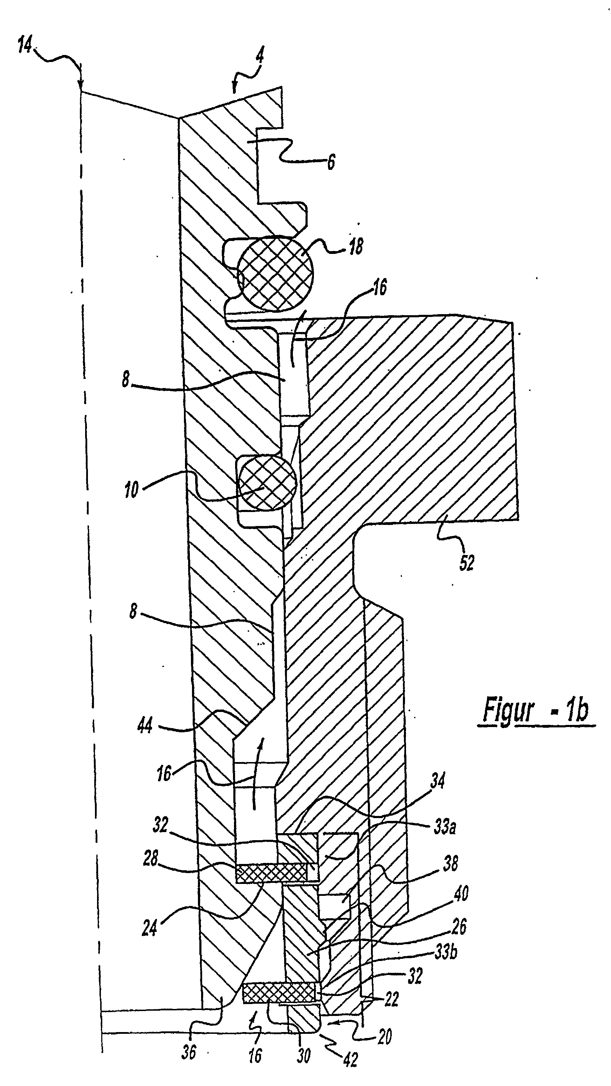

Wie sich aus den beiden Teildarstellungen der Fig. 1 ergibt, besteht eine erste Ausführung einer erfindungsgemäßen Steckkupplung aus zwei Kupplungsteilen, und zwar aus einem Aufnahmeteil 2 und aus einem Steckerteil 4. Das Steckerteil 4 ist mit einem Steckerschaft 6 in eine Aufnahmeöffnung 8 des Aufnahmeteils 2 einsteckbar und hierbei über mindestens eine Umfangsdichtung 10 gegen die Aufnahmeöffnung 8 abgedichtet sowie gegen Lösen gesichert entgegen der Einsteckrichtung (Pfeilrichtung 14) arretierbar. Einerseits ist dabei eine teilgesteckte Vorraststellung (Fig.1b) und andererseits eine ganz gesteckte Vollraststellung (Fig.1a) des Steckerteiles 4 möglich. In der bereits gegen Lösen in Pfeilrichtung 14 arretierten Vorraststellung liegt eine derart unvollständige Abdichtung vor, daß im Falle einer Druckbeaufschlagung mit einem Druckmedium, insbesondere Druckluft, ein Signal vorzugsweise in Form eines akustisch wahrnehmbaren Leckgeräusches erzeugt wird. Es handelt sich hierbei um eine definiert begrenzte Undichtigkeit bzw. eine durch die Anordnung und/oder Ausbildung der Umfangsdichtung 10 relativ zum Aufnahmeteil 2 bewirkte Bildung eines Spaltes, wodurch das Druckmedium entsprechend der gestrichelten Pfeile 16 dosiert ausströmt und dabei das Leckgeräusch insbesondere als Pfeifen, Zischen oder dergleichen, erzeugt. Dies kann dann als Signal dafür gewertet werden, daß noch nicht die korrekt gesteckte Vollraststellung erreicht ist, so daß in diesem Fall ausgehend von der Vorraststellung die Steckkupplung durch weitergehendes Stecken in die Vollraststellung überführt werden kann.

Zusätzlich zu der Umfangsdichtung 10 kann - wie dargestellt - eine weitere Dichtung 18 insbesondere im Mündungsbereich der Aufnahmeöffnung 8 vorgesehen sein, die zum Abdichten gegen Eindringen von Schmutz, Staub, Feuchtigkeit und dergleichen dient.

Die Steckkupplung weist ein Halteelement 20 auf, welches in einer Ausnehmung 22 des einen Kupplungsteils - wie dargestellt, bevorzugt des Aufnahmeteils 2 - sitzt und in der Vorraststellung bzw. in der Vollraststellung jeweils eine Rastkante 24 des anderen Kupplungsteils - wie dargestellt, vorzugsweise des Steckerteils 4 - rastend formschlüssig hintergreift. Im dargestellten, bevorzugten Ausführungsbeispiel wird die Ausnehmung 22 durch eine Innenringnut innerhalb der Aufnahmeöffnung 8 gebildet, während die Rastkante 24 eine einseitige Begrenzung einer Außenringnut am Stekkerschaft 6 bildet.

Es liegt jedoch ebenfalls im Bereich der Erfindung, dies umgekehrt vorzusehen, d.h. das Halteelement 20 in einer Ausnehmung bzw. Außenringnut am Steckerschaft 6 zu lagern und die Rastkante 24 innerhalb der Aufnahmeöffnung 8 zu bilden. Das Halteelement 20 ist derart ausgebildet, daß es sowohl in der Vorraststellung (Fig. 1b) als auch in der Vollraststellung (Fig. 1a) jeweils mit derselben, einzigen Rastkante 24 zusammenwirkt.

Insbesondere besteht das Halteelement 20 aus einem käfigartigen Trägerelement 26 und zwei in dem Trägerelement 26 derart axialbenachbart hintereinander sowie radialelastisch verformbar gehalterten Rastelementen 28, 30, daß die Rastkante 24 in der Vorraststellung gemäß Fig. 1b von dem ersten Rastelement 28 und in der Vollraststellung gemäß Fig. 1a von dem zweiten Rastelement 30 hintergriffen wird. Dabei sitzt das Trägerelement 26 bevorzugt innerhalb der als Innenringnut ausgebildeten Ausnehmung 22 in der Aufnahmeöffnung 8.

Das Trägerelement 26 ist bevorzugt als Ringkörper mit zwei Aufnahmeräumen 32 für die Rastelemente 28, 30 ausgebildet. Die Aufnahmeräume 32 können - wie dargestellt - als querschlitzartige Ausnehmungen oder auch als innere Ringnuten ausgebildet sein.

Das Trägerelement 26 kann - wie dargestellt - ein einstückiges Formteil, insbesondere aus Kunststoff, oder auch mehrteilig ausgeführt sein. Hierbei können die Rastelemente 28, 30 und die diese aufnehmenden Aufnahmeräume 32 derart ausgebildet sein, daß die Rastelemente 28, 30 von außen quer zur Mittelachse des Trägerelementes 26 bzw. des Ringkörpers in die Aufnahmeräume 32 einschiebbar sind.

Die Rastelemente 28, 30 können vorzugsweise aus Kunststoff oder Metall, insbesondere aus Federstahl, bestehen und können als geschlitzte Federringe oder als Federklammern mit zwei über einen Verbindungsabschnitt einstückig verbundenen Federarmen, beispielsweise als Stanzteile oder aus Federdraht, ausgebildet sein.

Erfindungsgemäß ist das Halteelement 20 derart ausgebildet und in der Ausnehmung 22 des einen Kupplungsteils 2 relativbeweglich angeordnet, daß zumindest in der Vollraststellung, in den hier dargestellten Ausführungen jedoch vorteilhafterweise sowohl in der Vorraststellung als auch in der Vollraststellung, mindestens eines seiner Rastelemente 28, 30 durch eine Verschiebung des Halteelementes 20 entgegen der Steckrichtung 14 aus einer ungesperrten Position, in der jeweils die Rastverbindung 28, 24; 30, 24 aufgehoben werden kann, in eine gesperrte Position überführbar ist, in der jeweils die Aufhebung der Rastverbindung 28, 24; 30, 24 formschlüssig unterbunden ist. Die Fig. 1a und 1b zeigen jeweils die für die Aufhebung der Rastverbindung 28, 24; 30, 24 gesperrten Positionen des Halteelementes 20.

Zur formschlüssigen Unterbindung der Aufhebung der Rastverbindung 28, 24; 30, 24 sind zwei mit den Rastelementen 28, 30 zusammenwirkende Verriegelungsabschnitte 33a, 33b vorgesehen, die ortsfest zur Ausnehmung 22 angeordnet ist.

Falls nur in der Vollraststellung eine formschlüssig gesperrte Position für die Aufhebung der Rastverbindung 30, 24 vorgesehen sein sollte, ist es ausreichend, wenn nur ein Verriegelungsabschnitt 33b zum Zusammenwirken mit dem entsprechenden Rastelement 30 vorgesehen ist.

In allen Ausführungsformen weist das Trägerelement 26 zumindest auf seiner der Rastkante 24 radial zugekehrten Seite insbesondere zwei diametral gegenüberliegend angeordnete, schlitzartige Öffnungen auf, die infolge einer radial nach innen gerichteten Bewegung der Rastelemente 28, 30 bereichsweise von den Rastelementen 28, 30 zum Hintergreifen der Rastkante 24 durchgriffen werden können. Dabei wird sowohl in der Vorraststellung als auch in der Vollraststellung die radial nach außen gerichtete Rückbewegung der Rastelemente 28, 30 in der gesperrten Position jeweils durch den Verriegelungsabschnitt 33a, 33b begrenzt.

Das Charakteristikum des ersten Ausführungsbeispiels besteht dabei darin, daß die ortsfesten Verriegelungsabschnitte 33a, 33b Bestandteile des Aufnahmeteils 2 sind, in dem sich die Ausnehmung 22 befindet. Die Verriegelungsabschnitte 33a, 33b sind in der Ausnehmung 22 axial gegeneinander versetzte Abschnitte mit jeweils einem gegenüber dem Maximaldurchmesser der Ausnehmung 22 reduzierten Durchmesser.

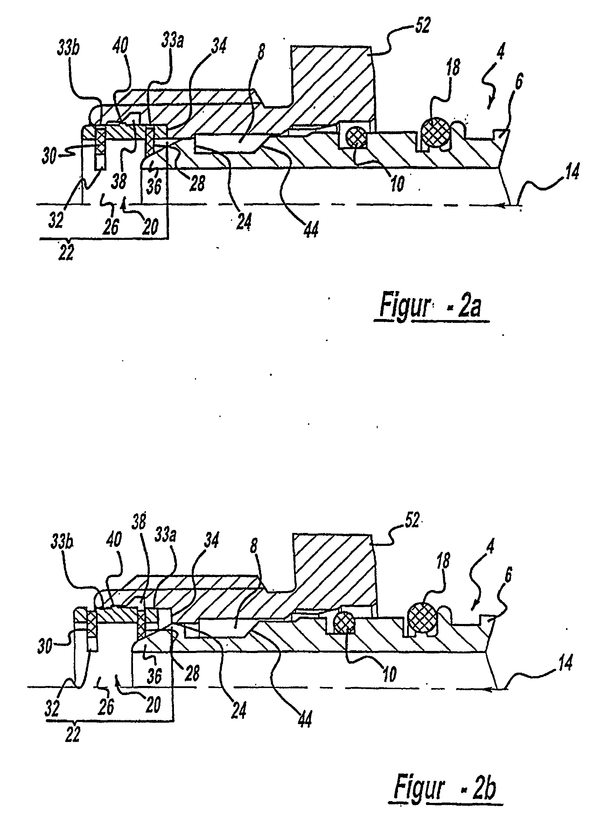

Fig. 2a zeigt eine erste Phase, in der das Steckerteil 4 bereits in die Aufnahmeöffnung 8 des Aufnahmeteils 2 eingesteckt ist. Das Halteelement 20 befindet sich an der - in Einsteckrichtung 14 gesehen - vorderen Kante 34 der Ausnehmung 22. Die beiden Rastelemente 28, 30 ragen in die Aufnahmeöffnung 8 hinein. Eine konisch ausgebildete Spitze 36 des Steckerteiles 4 kommt dabei an dem ersten Rastelement 28 zur Anlage. Die radial nach außen gerichtete (unter Aufweitung erfolgende) Rückbewegung des Rastelementes 28 ist in dieser Position gesperrt, da sich der Aufnahmeraum 32 für das Rastelement 28 im Bereich des ersten Verriegelungsabschnittes 33a befindet.

Wie Fig. 2b zeigt, wird beim weiteren Einführen des Stekkerteils 4 das Halteelement 20 durch die Spitze 36 des Steckerteils 4 mitgenommen, bis sich der Aufnahmeraum 32 in in einen sich an den ersten Verriegelungsabschnitt 33a in Einsteckrichtung 14 anschließenden Bereich 38 eines größeren Durchmessers der Ausnehmung 22 befindet. Bei der Bewegung des Halteelementes 20 kommt ein radial nach außen gerichteter Vorsprung 40 des Trägerelements 26 an einem radial nach innen gerichteten Vorsprung der Ausnehmung 22, der durch den zweiten Verriegelungsabschnitt 33b gebildet ist, zur Anlage. Dadurch wird der weiteren Bewegung des Halteelements 20 in Einführungsrichtung 14 des Steckerteils 4 ein Widerstand entgegengesetzt.

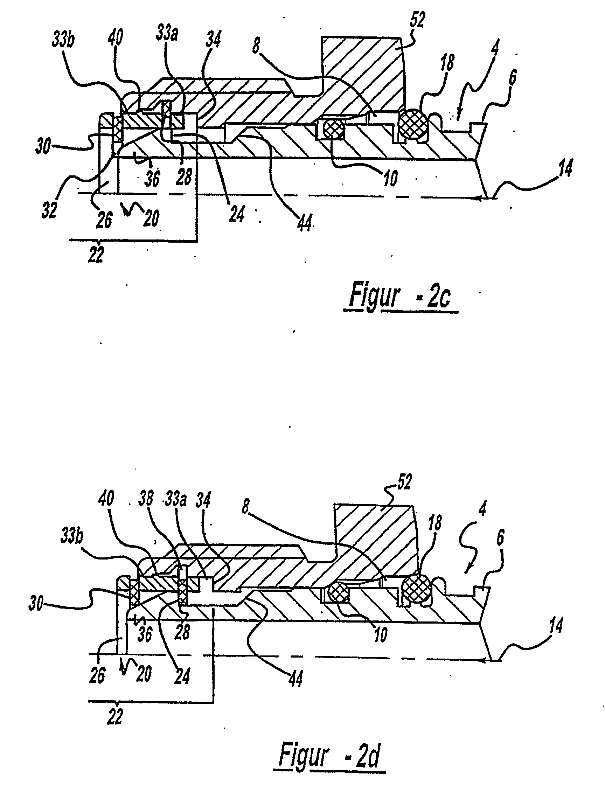

Bei einem weiteren Einschieben des Steckerteils 4 (Fig. 2c) erfolgt nun bei feststehendem Halteelement 20 durch den Aufnahmeraum 32 hindurch eine radiale Bewegung des Rastelementes 28 nach außen.

Fig. 2d veranschaulicht das Erreichen der teilgesteckten, unvollständig abgedichteten Vorraststellung, in der die Rastkante 24 des Steckerteiles 4 von dem ersten Rastelement 28 hintergriffen wird. Das Rastelement 28 befindet sich noch in einer ungesperrten Position, in der die Rastverbindung 28, 24 noch aufgehoben werden kann.

An die Montagephase entsprechend Fig. 2d kann sich die in Fig. 1b dargestellte Phase anschließen. Mittels einer Verschiebung des Halteelementes 20 durch eine Rückbewegung des Steckerteiles 4 gelangt das Rastelement 28 in eine gesperrte Position. Die Rückbewegung des Steckerteils 4 kann dabei durch ein einfaches Zurückziehen oder (in der Regel) durch Druckbeaufschlagung hervorgerufen werden.

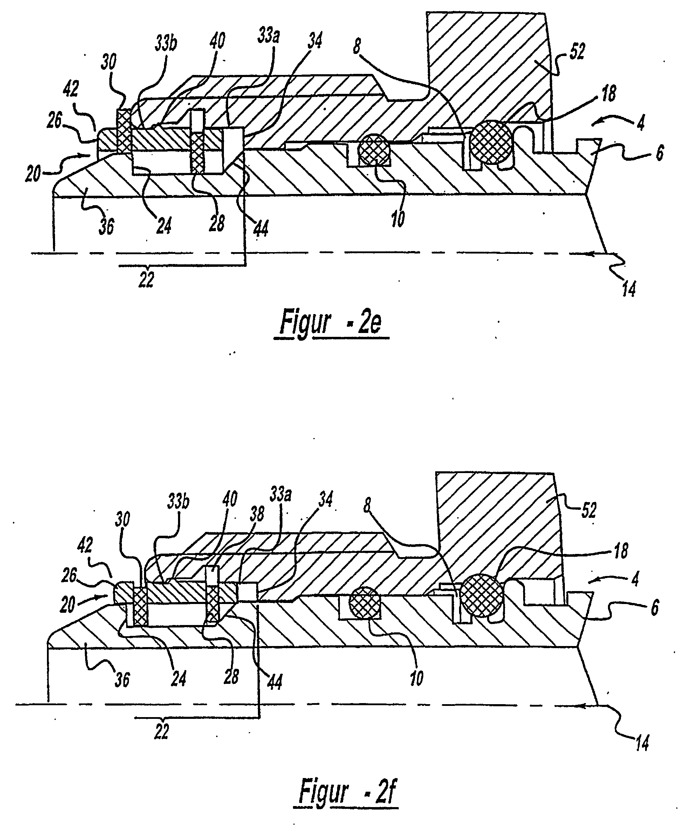

Wenn das Steckerteil 4 aus der in Fig. 2d dargestellten Position nicht wieder zurückbewegt, sondern, wie dies für eine korrekte Montage vorgesehen ist, weiter eingesteckt wird, gelangt die erfindungsgemäße Steckkupplung nicht in die in Fig. 1b dargestellte Phase, sondern in eine Phase gemäß Fig. 2e. Bei einem weiteren Einschieben des Steckerteils 4 erfolgt bei feststehendem Halteelement 20 eine radiale Bewegung des zweiten Rastelementes 30 nach außen. Der Aufnahmeraum 32 für das Rastelement 30 befindet sich dabei in einer in Einsteckrichtung 14 hinter dem zweiten Verriegelungsabschnitt 33b liegenden Position, in der seine radial nach außen gerichteten Öffnung in einem zweiten Bereich 42 eines größeren Durchmessers der Ausnehmung 22 liegt. In dieser Phase treten erstmalig infolge der Verpressung der Dichtungen 10, 18 nennenswerte Steckkräfte auf.

Fig. 2f veranschaulicht nun das Erreichen der ganz gesteckten, vollständig druckdicht abgedichteten Vollraststellung, in der die Rastkante 24 des Steckerteiles 4 nunmehr von dem zweiten Rastelement 30 hintergriffen wird, welches sich jedoch noch - ebenso wie wiederum das erste Rastelement 28 - in seiner ungesperrten Position befindet. Die zweite, der Rastkante 24 gegenüberliegende Begrenzung der Außenringnut am Steckerschaft 6, ist eine ähnlich wie die Steckerspitze 36 ausgebildete konische Schrägfläche 44. Unter der Wirkung der durch die Anlage des ersten Rastelementes 28 an der konisch ausgebildeten Schrägfläche 44 des Steckerteiles 4 hervorgerufenen, radial nach außen gerichteten Kräfte erfolgt beim Einschieben im ersten vergrößerten Durchmesserbereich 38 der Ausnehmung 22 zur Vermeidung von Beschädigungen durch Übermontage (zu tiefes Stecken) eine radiale Bewegung nach außen.

An die in Fig. 2f dargestellte Phase schließt sich der Zustand der vollständig und ordnungsgemäß montierten erfindungsgemäßen Steckkupplung (Fig. 1a) an, bei der durch eine Verschiebung des Halteelementes 20 entgegen der Steckrichtung 14 das zweite Rastelement 30 aus seiner ungesperrten Position in seine gesperrte Position gelangt ist. In dieser Position ist eine radial nach außen gerichtete Rückbewegung des Rastelementes 30 durch den Verriegelungsabschnitt 33b unterbunden bzw. begrenzt. Die Rückbewegung erfolgt dabei hauptsächlich durch die Federwirkung der Dichtung 18 im Mündungsbereich der Aufnahmeöffnung 8. Durch die mit Hilfe des Halteelementes 20 erfolgte Verrastung des Steckerteiles 4 mit dem Aufnahmeteil 2 und die anschließende Verriegelung der Rastelemente 28, 30 ist eine hohe Betriebssicherheit der Steckkupplung gegeben.

Wie in Fig. 1a gezeigt, kann es, um eine Lösbarkeit der Steckverbindung zu erreichen, bevorzugt vorgesehen sein, daß das Aufnahmeteil 2 aus mindestens zwei lösbar miteinander verbundenen Teilen, und zwar aus einem Basisteil 50 und aus einem Einsatzteil 52, besteht, wobei diese Teile 50, 52 zwischen sich die das Halteelement 20 aufnehmende Ausnehmung 22 begrenzen. Auf diese Weise läßt sich der Steckerschaft 6 zusammen mit dem Einsatzteil 52 entnehmen, nachdem das Einsatzteil 52 vom Basisteil 50 gelöst wurde.

Während im ersten Ausführungsbeispiel der erste Bereich 38 des gegenüber dem ersten Verriegelungsabschnitt 33a vergrößerten Durchmessers der Ausnehmung 22 im Einsatzteil 52 liegt, befindet sich mit Vorteil zweite Bereich 42 des gegenüber dem zweiten Verriegelungsabschnitt 33b vergrößerten Durchmessers der Ausnehmung 22 im Basisteil 50.

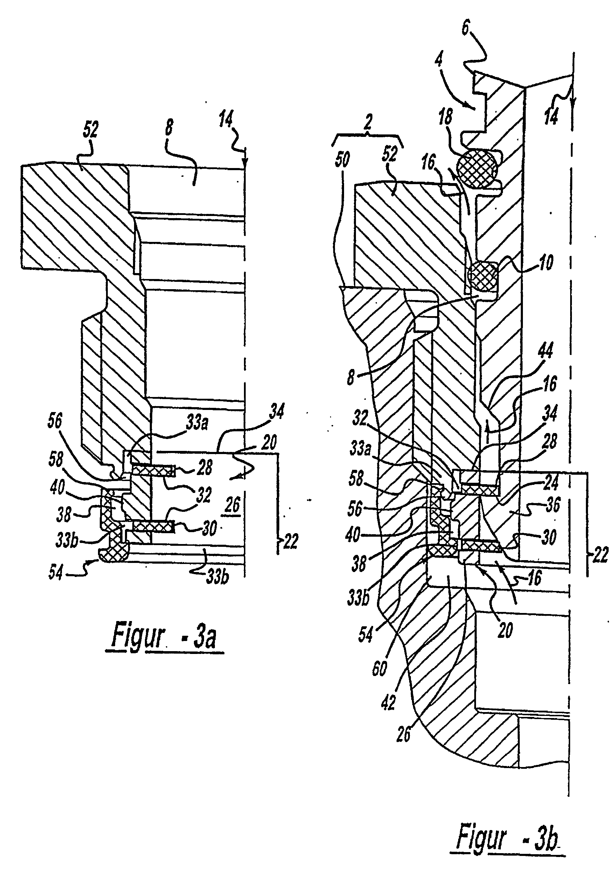

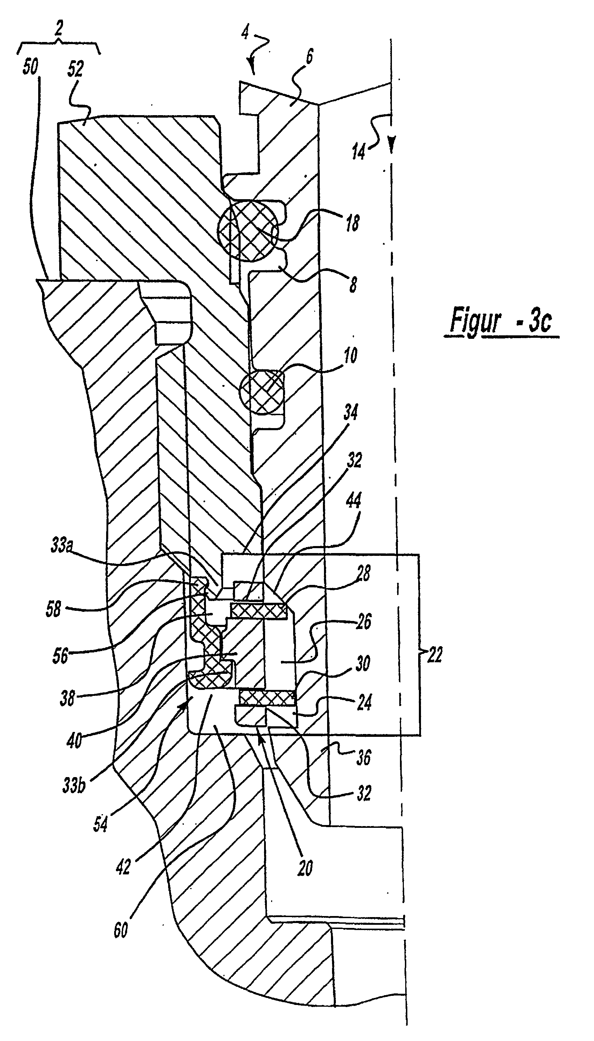

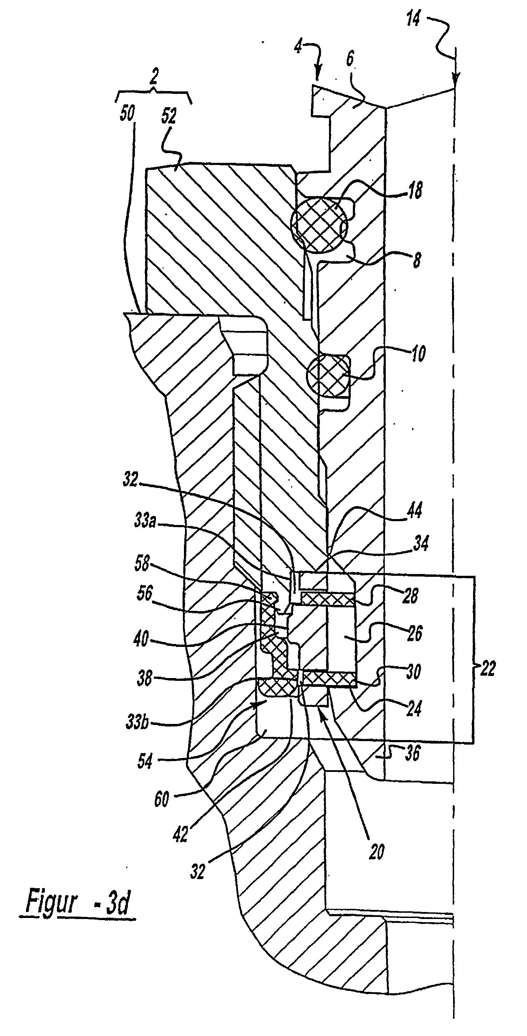

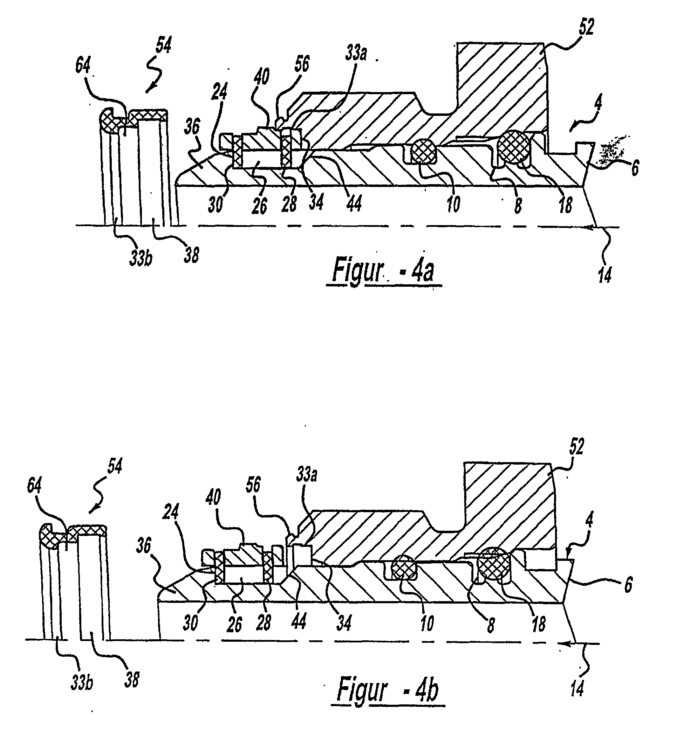

Das zweite Ausführungsbeispiel einer erfindungsgemäßen Steckkupplung ist in den Fig. 3 (Montage - Fig. 3a bis 3d) und 4 (Demontage Fig. 4a und 4b) wiedergegeben. Das Charakteristikum des zweiten Ausführungsbeispiels besteht dabei darin, daß der zweite Verriegelungsabschnitt 33b Bestandteil eines separaten Verriegelungsteiles 54 ist, welches als ein aus Kunststoff bestehendes Ringteil ausgebildet sein kann. Im Verriegelungteil 54 befindet sich auch der sich an den Bereich des ersten Verriegelungsabschnittes 33a in Einsteckrichtung 14 anschließende Bereich 38 größeren Durchmessers. Wie Fig. 3 zeigt, ist das Verriegelungsteil 54 über eine lösbare Verbindung an dem die Ausnehmung 22 aufweisenden Kupplungsteil, insbesondere am Einsatzteil 52 des Aufnahmeteiles 2, befestigbar. Ein Vorteil dieser Ausführung besteht darin, daß das Einsatzteil 52 aufgrund der einfacheren Gestalt des in ihm liegenden Teils der Ausnehmung 22 fertigungstechnisch leichter herstellbar ist.

Fig. 3a zeigt das Einsatzteil 52 des Aufnahmeteiles 2, das daran befestigbare separate Verriegelungsteil 54 mit den Verriegelungsabschnitten 33a, 33b und das Halteelement 20 vor dem Einführen des Steckerteiles 4. Für die Herstellung ihrer lösbaren Verbindung weisen das Einsatzteil 52 und das Verriegelungsteil 54 vorzugsweise komplementäre Rastmittel, und zwar eine Außenringwulst 56 am Einsatzteil 52 und eine Innenringwulst 58 am Verriegelungsteil 54, auf. Das Halteelement 20 wird umfangsgemäß teilweise durch das Einsatzteil 52, teilweise durch das Verriegelungsteil 54 übergriffen.

Fig. 3b zeigt die Phase der unvollständigen Montage der zweiten Ausführung der erfindungsgemäßen Steckkupplung. Das Einsatzteil 52 und das Verriegelungsteil 54 sind über die Außenringwulst 56 am Einsatzteil 52 und die Innenringwulst 58 am Verriegelungsteil 54 miteinander verrastet. Es liegt die Vorraststellung des Steckerteiles 4 vor und durch Verschiebung des Halteelementes 20 entgegen der Steckrichtung 14 - hervorgerufen beispielsweise durch eine vorzeitige Druckbeaufschlagung - ist das erste Rastelement 28 in eine gesperrte Position gelangt. Der die Sperrung bewirkende erste Verriegelungsabschnitt 33a ist dabei innerhalb der Aufnahmeöffnung 8 durch einen Endabschnitt des Einsatzteiles 52 an dessen dem Basisteil 50 zugewandten Ende gebildet. Gleichzeitig ist auch das zweite Rastelement 30 in eine gesperrte Position gelangt, in der eine radial nach außen gerichtete Bewegung durch den zweiten Verriegelungsabschnitt 33b verhindert ist. Der zweite Verriegelungsabschnitt 33b wird dabei durch einen gegenüber dem maximalen Innendurchmesser reduzierten Bereich des separaten Verriegelungsteiles 54 gebildet.

Gemäß Fig. 3c ist die ganz gesteckte, vollständig druckdicht abgedichtete Vollraststellung erreicht. Die Rastkante 24 des Steckerteiles 4 wird von dem zweiten Rastelement 30 hintergriffen, nachdem die Steckerspitze 36 mit der Rastkante 24 daran vorbeigeführt wurde. sowohl das erste Rastelement 28 als auch das zweite Rastelement 30 befinden sich in dieser Phase in einer ungesperrten Position. Der radial nach außen gerichtete Vorsprung 40 des Halteelementes 20 (bzw. dessen Trägerelements 26) liegt an einem radial nach innen gerichteten Vorsprung des Verriegelungsteiles 54 an, der auch hier durch den zweiten Verriegelungsabschnitt 33b gebildet ist. Dadurch wird der weiteren Bewegung des Halteelementes 20 in Einführungsrichtung 14 des Steckerteils 4 ein Widerstand entgegengesetzt, was in Einführungsrichtung 14 zu einer Relativbewegung des Steckerteils 4 zum Halteelement 20 führt. In diesem Zusammenhang ist darauf zu achten, daß die lösbare Verbindung (wie die hier dargestellte Rastverbindung 56, 58) zwischen dem Verriegelungsteil 54 und dem Aufnahmeteil 2 ausreichend fest ist, um einem Lösen durch die von ihr aufgenommene Steckkraft standzuhalten.

In Fig. 3d ist das Erreichen der Montageendphase wiedergegeben, d.h. es liegt eine vollständig und ordnungsgemäß montierte erfindungsgemäße Steckkupplung vor. Aus der Montagephase in Fig. 3c sind durch eine Verschiebung des Halteelementes 20 entgegen der Steckrichtung 14 beide Rastelemente 28, 30 aus ihrer ungesperrten Position in die jeweils gesperrte Position gelangt.

Wie durch Fig. 4 veranschaulicht wird, besitzt die zweite Ausführung der erfindungsgemäßen Steckkupplung eine gegenüber der ersten Ausführung verbesserte Lösbarkeit, die montagetechnisch vorteilhaft ist. Zur Demontage der Steckkupplung wird zunächst das Einsatzteil 52 vom Basisteil 50 gelöst. Auf diese Weise läßt sich der Steckerschaft 6 zusammen mit dem Einsatzteil 52 entnehmen. Fig. 4a zeigt, daß nun in einfacher Weise auch die Verbindung 56, 58 zwischen dem Verriegelungsteil 54 und dem Einsatzteil 52 getrennt werden kann. Dies geschieht, indem das Verriegelungsteil 54 in Steckrichtung 14 vom Einsatzteil abgezogen wird. Danach kann der Steckerschaft 6 weiter in Steckrichtung 14 in die in Fig. 4b dargestellte Position ausgeschoben werden, in der das Halteelement 20 mit seinen beiden Rastelementen 28, 30 vollständig freiliegt. Beide Rastelemente 28, 30 können entfernt werden, wobei zum Aufspreizen z.B. eine Montagehilfsvorrichtung eingesetzt werden kann.

Vorteilhafterweise ist es weder für die erste noch für die zweite Ausführung der Erfindung notwendig, im Aufnahmeteil 2 eine sogenannte Formbohrung vorzusehen, d.h. einen in Einsteckrichtung 14 sich über eine Stufe reduzierenden Durchmesser der Aufnahmeöffnung 8, da dies nicht funktionsnotwendig ist. Falls aber eine solche Formbohrung vorhanden ist, so ist dies für eine Verwendung dieser Ausführungsformen keinesfalls hinderlich. Hinsichtlich der konstruktiven Gestaltung der Ausnehmung 22 ist lediglich darauf zu achten, daß die Ausnehmung 22 genügend groß bemessen ist, daß die einzelnen Montagephasen, insbesondere diejenige, in der das Steckerteil 4 mit dem Halteelement 20 maximal in die Aufnahmeöffnung 8 eingeführt ist (vgl. Fig. 2f und 3c), ungehindert ablaufen können. Es ist daher als Bestandteil der Aufnahme 22 im Basisteil 50 in axialer Richtung ein entsprechend großer Freiraum 60 vorzusehen.

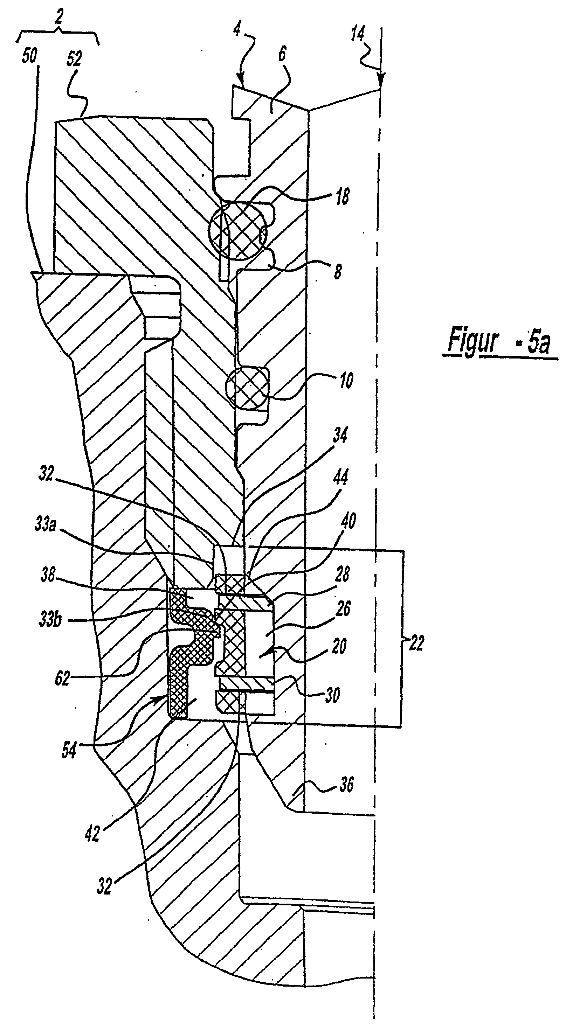

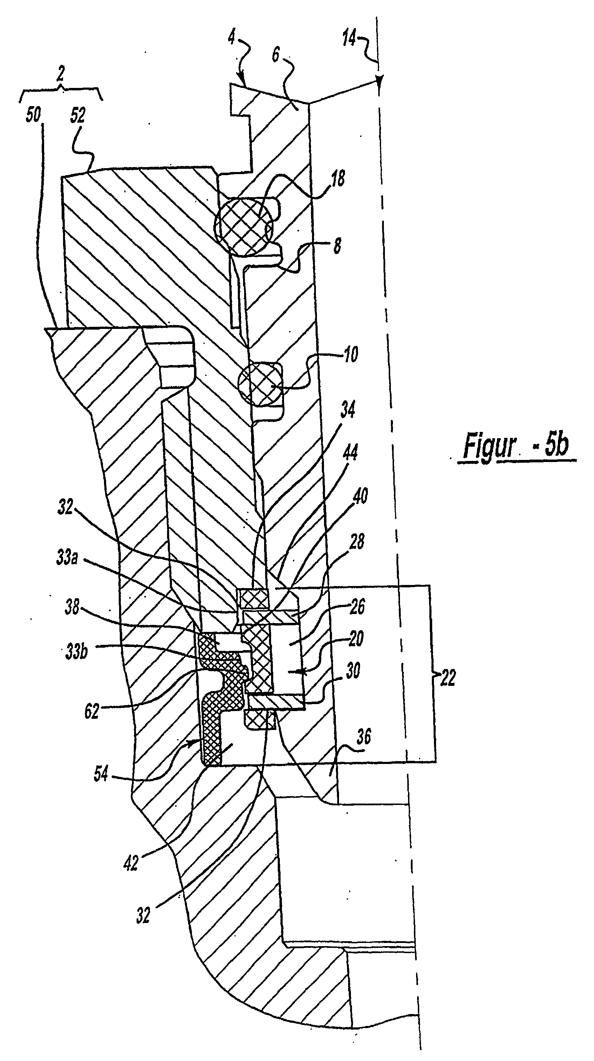

Eine dritte Ausführung einer erfindungsgemäßen Steckkupplung wird durch Fig. 5 veranschaulicht, wobei Fig. 5a die Montagephase unmittelbar nach der Vollrastung und Fig. 5b die Phase nach Vollrastung und Eintritt der Sperrposition zeigen. Das Charakteristikum des dritten Ausführungsbeispiels besteht darin, daß wie bei der zweiten Ausführung der zweite Verriegelungsabschnitt 33b Bestandteil eines separaten Verriegelungsteiles 54 ist, welches ebenfalls als Ringteil ausgebildet sein kann, jedoch das Verriegelungsteil 54 nicht mit dem Aufnahmeteil 2 verbindbar ist. Das Verriegelungsteil 54 wird im Montagezustand lediglich im Aufnahmeteil 2 zwischen den beiden die Ausnehmung 22 begrenzenden, lösbar miteinander verbundenen Teilen (Basisteil 50 und Einsatzteil 52) gehalten.

Weitere Unterschiede zur zweiten Ausführung bestehen in der Gestaltung der Innenkontur des Verriegelungsteiles 54 und der Außenkontur des Halteelementes 20. Der radial nach innen gerichtete Vorsprung (hier mit dem Bezugszeichen 62 bezeichnet) des Verriegelungsteiles 54, an dem der nach außen gerichtete Vorsprung 40 des Halteelementes 20 (bzw. dessen Trägerelements 26) zur Anlage kommt, ist hier nicht durch den zweiten Verriegelungsabschnitt 33b gebildet, sondern liegt in Einsteckrichtung 14 vor dem Verriegelungsabschnitt 33b und springt auch diesem gegenüber nach innen vor. Der Wandungsquerschnitt des Verriegelungsteils 54 erhält so die Form eines radial nach außen geöffneten U, an dessen unterem Verbindungsbogen sich der mit dem Vorsprung 40 des Halteelementes 20 zusammenwirkende Vorsprung 62 und an dessen Schenkelenden sich jeweils axial, von den U-Schenkeln nach außen gerichtete Fortsätze zur stirnseitigen Anlage am Basisteil 50 und am Einsatzteil 52 des Aufnahmeteiles 2 befinden.

Der radial nach außen gerichtete Vorsprung 40 des Halteelementes 20 ist als einseitige Begrenzung einer zwischen den Aufnahmeräumen 32 für die Rastelemente 28, 30 liegenden Außenringnut am Trägerelement 26 ausgeführt, wobei die axial gerichtete Bewegung des radial nach innen gerichteten Vorsprungs 62 des Verriegelungsteiles 54 von dieser Nut in beiden axialen Richtungen begrenzt wird. Verriegelungsteil 54 und Trägerelement 26 können dabei so gestaltet sein, daß das Verriegelungsteil 54 auf das Halteelement 20 aufgerastet werden kann.

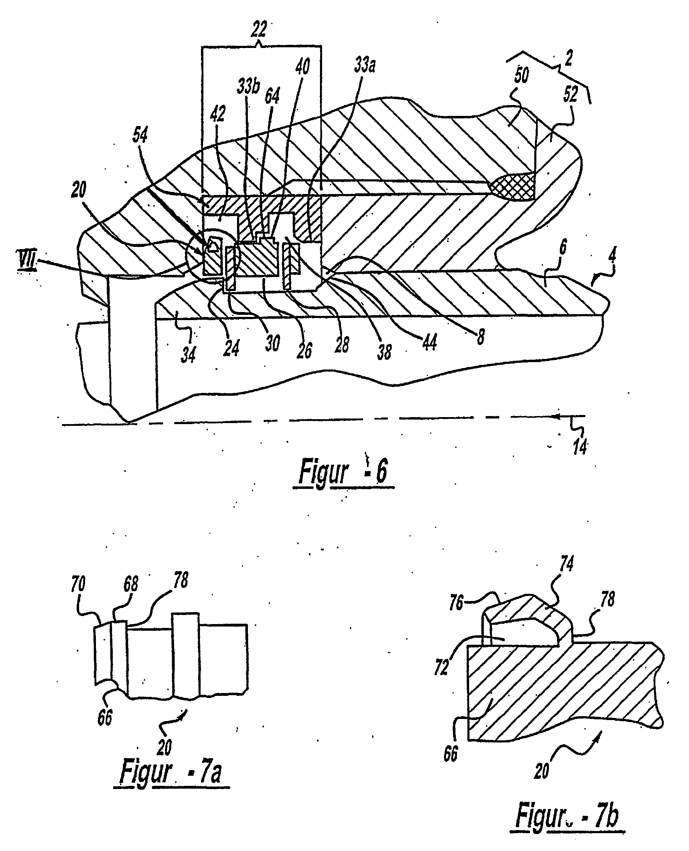

Bei der in Fig. 6 dargestellten, die Montagephase unmittelbar nach der Vollrastung zeigenden, vierten Ausführung einer erfindungsgemäßen Steckkupplung, ist ebenfalls ein separates, Verriegelungsteil 54 vorgesehen, das als loser Ring zwischen das Basisteil 50 und das Einsatzteil 52 eingelegt werden kann. Bei dieser Ausführung besitzt das Halteelement 20 eine derartige, gegenüber den übrigen Ausführungen längenverkürzte Gestalt, daß es nicht, wie bei den anderen Ausführungen in einem durchmessererweiterten Bereich der Aufnahmeöffnung 8 des Einsatzteiles 52, sondern in der Ausnehmung 22 - in Einsteckrichtung 14 gesehen - vollständig hinter dem Einsatzteil 52 gehalten ist. Alle beiden Verriegelungsabschnitte 33a, 33b sind Bestandteile des Verriegelungsteiles 54.

Der Wandungsquerschnitt des Verriegelungsteils 54 weist die Form eines liegenden F auf, das mit dem Fuß seines senkrechten, in Achsrichtung der Steckkupplung ausgerichteten Balkens in Einsteckrichtung 14 und mit seinen waagrechten, radial gerichteten Balken nach innen weist. An der Stirnfläche der beiden waagrechten Balken des F befinden sich dabei die Verriegelungsabschnitte 33a, 33b, wobei der zweite Verriegelungsabschnitt 33b eine kleine Ausnehmung 64 aufweist, deren Kante den mit dem Vorsprung 40 des Halteelementes 20 zusammenwirkenden Vorsprung bildet. Mit seinem oberen F-Balken liegt das Verriegelungsteil 54 in der Aufnahmeöffnung 8 an der Innenwand des Einsatzteiles 52 und mit dem Fuß seines senkrechten Balkens an der Stirnfläche des Basisteiles 50 an.

Wie Fig. 7 zeigt, kann das Halteelement 20 bei dieser vierten erfindungsgemäßen Ausführung in unterschiedlicher Weise gestaltet sein. Die alternativen Ausführungsformen betreffen dabei die Umfangsgestaltung eines Endabschnittes 66 des Halteelementes 20 auf seiner in Steckrichtung 14 weisenden Seite. Fig. 7a zeigt dabei eine Ausführung, bei der dieser Endabschnitt 66 am Umfang eine Durchmesserstufe 68 aufweist, die zur Erleichterung des Einführens mit einer in Steckrichtung 14 sich konisch verjüngenden Fase 70 versehen ist, und Fig. 7b zeigt eine Ausführung mit einer manschettenartigen Umfangsgestaltung im Endabschnitt 66.

Durch die manschettenartige Gestaltung (Fig. 7b) ist um den Grundkörper des Halteelementes 20 herum ein in Einsteckrichtung 14 offener, entgegen der Einsteckrichtung 14 jedoch geschlossener Ringkanal 72 gebildet. In diesem Ringkanal 72 kann das Druckmedium entgegen der Einsteckrichtung 14 angreifen und so die Rückbewegung des Halteelementes 20 unterstützen. In Analogie zu der sich in Steckrichtung 14 konisch verjüngenden Fase 70 der Ausführung gemäß Fig. 7a ist die Manschette 74 mit einer Einführschräge 76 versehen. Ebenso wie bei der Ausführung mit Durchmesserstufe 68 im Endabschnitt 66 (Fig. 7a) ist eine rückwärtige Anlagefläche 78 für das Verriegelungsteil 54 vorhanden. Halteelement 20 und Verriegelungsteil 54 können dabei derart aneinander angepaßt sein, daß der den zweiten Verriegelungsabschnitt 33b tragende waagrechte Balken des F des Verriegelungsteiles 54 eine (in Fig. 6 gezeigte, nicht näher bezeichnete) Ausnehmung und die Manschette 74 eine dieser Ausnehmung komplementäre äußere Form aufweist. Durch diese Gestaltung sind in der gesperrten Position bei Druckbeaufschlagung Halteelement 20 und Verriegelungsteil 54 wirksam gegen eine Relativbewegung gesichert.

Die vierte Ausführung vereint in sich die Vorteile der hohen Betriebssicherheit, der einfachen Montage und Demontage sowie die Möglichkeit der Verwendung von Normteilen als Bestandteile des Aufnahmeteils 2.

### Bezugszeichen

- 2: Kupplungsteil, Aufnahmeteil
- 4: Kupplungsteil, Steckerteil
- 6: Steckerschaft
- 8: Aufnahmeöffnung
- 10: Umfangsdichtung
- 14: Einsteckrichtung von 4 in 2 (Pfeil)
- 16: Ausströmrichtung des Druckmediums (Pfeile)
- 18: Dichtung
- 20: Halteelement in 22
- 22: Ausnehmung in 2
- 24: Rastkante an 4
- 26: Trägerelement von 20
- 28: erstes Rastelement von 20
- 30: zweites Rastelement von 20
- 32: Aufnahmeräume des Trägerelements
- 33a: Verriegelungsabschnitt
- 33b: Verriegelungsabschnitt
- 34: Kante von 22
- 36: Spitze von 4
- 38: erster vergrößerter Durchmesserbereich in 22
- 40: Vorsprung an 26
- 42: zweiter vergrößerter Durchmesserbereich in 22
- 44: konische Schrägfläche an 6, gegenüber 24
- 50: Basisteil von 2
- 52: Einsatzteil von 2
- 54: Verriegelungsteil
- 56: Außenringwulst an 52
- 58: Innenringwulst an 54
- 60: Freiraum in 50
- 62: Innenvorsprung von 54
- 64: Ausnehmung in 54
- 66: Endabschnitt von 20
- 68: Durchmesserstufe in 66
- 70: Fase
- 72: Ringkanal
- 74: Manschette
- 76: Einführschräge
- 78: Anlagefläche

## Patentansprüche

1. Steckkupplung für Druckmittelsysteme, bestehend aus zwei Kupplungsteilen (2, 4), und zwar einem Aufnahmeteil (2) und einem Steckerteil (4), wobei das Steckerteil (4) mit einem Steckerschaft (6) umfangsgemäß abgedichtet in eine Aufnahmeöffnung (8) des Aufnahmeteils (2) in einer Steckrichtung (14) einsteckbar und über ein in einer Ausnehmung (22) des einen Kupplungsteils (2) sitzendes Halteelement (20) einerseits in einer teilgesteckten, unvollständig abgedichteten Vorraststellung und andererseits in einer ganz gesteckten, vollständig druckdicht abgedichteten Vollraststellung gegen Lösen arretierbar ist, wobei in den beiden Raststellungen Rastelemente (28, 30) des Halteelementes (20) jeweils unter Bildung einer Rastverbindung (28, 24; 30, 24) eine Rastkante (24) des anderen Kupplungsteils (4) hintergreifen, wobei das eine Rastelement (28) für die Vorraststellung und das andere Rastelement (30) für die Vollraststellung wirksam ist,**dadurch gekennzeichnet, dass**
das Halteelement (20) derart ausgebildet und in der Ausnehmung (22) des einen Kupplungsteils (2) axial zur Steckrichtung (14) relativbeweglich .angeordnet ist, daß zumindest das für die Vollraststellung wirksame Rastelement (30) durch eine Verschiebung des Halteelementes (20) entgegen der Steckrichtung (14) aus einer ungesperrten Position, in der jeweils die Rastverbindung (28, 24; 30, 24) durch eine radiale Rückbewegung des Rastelmentes (30) aufhebbar ist, in eine gesperrte Position überführbar ist, in der jeweils die Aufhebung der Rastverbindung (28, 24; 30, 24) durch einen das Rastelement (30) formschlüssig gegen die Rückbewegung sperrenden, zu der Ausnehmung (22) ortsfesten Verriegelungsabschnitt (33b) unterbunden ist.

2. Steckkupplung nach Anspruch 1,
**dadurch gekennzeichnet, daß** das Halteelement (20) aus einem in der Ausnehmung (22) des einen Kupplungsteils (2) sitzenden Trägerelement (26) und zwei in dem Trägerelement (26) radialelastisch verformbar gehalterten und axial hintereinander angeordneten Rastelementen (28, 30) besteht.

3. Steckkupplung nach Anspruch 1 oder 2,
**dadurch gekennzeichnet, daß** alle Rastelemente (28, 30) in der Vorraststellung und/oder in der Vollraststellung durch die Verschiebung des Halteelementes (20) aus einer ungesperrten Position in eine gesperrte Position überführbar sind.

4. Steckkupplung nach einem der Ansprüche 1 bis 3,
**dadurch gekennzeichnet, daß** zur formschlüssigen Unterbindung der Aufhebung der Rastverbindung zwei mit dem Rastelement (28, 30) zusammenwirkende Verriegelungsabschnitte (33a, 33b) vorgesehen sind, die ortsfest zur Ausnehmung (22) angeordnet sind.

5. Steckkupplung nach einem der Anspruch 2 bis 4,
**dadurch gekennzeichnet, daß** das Trägerelement (26) als Ringkörper mit zwei, insbesondere schlitzartigen, Aufnahmeräumen (32) für die Rastelemente (28, 30) ausgebildet ist.

6. Steckkupplung nach einem der Ansprüche 2 bis 5,
**dadurch gekennzeichnet, daß** das Trägerelement (26) als einstückiges Formteil vorzugsweise aus Kunststoff gebildet ist, wobei die Rastelemente (28,30) und die Aufnahmeräume (32) derart ausgebildet sind, daß die Rastelemente (28, 30) quer zur Ringkörperachse in die Aufnahmeräume (32) einschiebbar sind.

7. Steckkupplung nach einem oder mehreren der Ansprüche 1 bis 6,
**dadurch gekennzeichnet, daß** das Aufnahmeteil (2) mindestens aus zwei lösbar miteinander verbundenen Teilen (50, 52) besteht, die zwischen sich die das Halteelement (20) aufnehmende Ausnehmung (22) begrenzen.

8. Steckkupplung nach einem der Ansprüche 4 bis 7,
**dadurch gekennzeichnet, daß** der Verriegelungsabschnitt (33a, 33b) Bestandteil des Kupplungsteils (2), insbesondere des Einsatzteiles (52) des Aufnahmeteiles (2), ist, in dem sich die Ausnehmung (22) befindet.

9. Steckkupplung nach Anspruch 8,
**dadurch gekennzeichnet, daß** die Ausnehmung (22), zumindest teilweise, als Formbohrung im Aufnahmeteil (2) ausgeführt ist, wobei die Verriegelungsabschnitte (33a, 33b) axial gegeneinander versetzte Abschnitte der Formbohrung mit jeweils einem gegenüber dem Maximaldurchmesser der Formbohrung re-duzierten Durchmesser sind, und in der Ausnehmung (22) in Einsteckrichtung (14) des Steckers (4) jeweils hin-ter den Verriegelungsabschnitten (33a, 33b) liegende Bereiche (38, 42) von gegenüber den Verriegelungsab-schnitten (33a, 33b) vergrößertem Durchmesser vorge-sehen sind.

10. Steckkupplung nach einem der Ansprüche 4 bis 7,
**dadurch gekennzeichnet, daß** min-destens ein Verriegelungsabschnitt (33b) Bestandteil eines separaten Verriegelungsteiles (54), insbesondere eines aus Kunststoff bestehenden Ringteiles, ist.

11. Steckkupplung nach Anspruch 10,
**dadurch gekennzeichnet, daß** alle Verriegelungsabschnitte (33a, 33b) Bestandteile des separaten Verriegelungsteiles (54) sind.

12. Steckkupplung nach Anspruch 10 oder 11,
**dadurch gekennzeichnet, daß** das Verriegelungsteil (54) über eine lösbare Verbindung an dem die Ausnehmung (22) aufweisenden Kupplungsteil (2), insbesondere am Einsatzteil (52) des Aufnahmeteiles (2), befestigbar ist.

13. Steckkupplung nach Anspruch 10 oder 11,
**dadurch gekennzeichnet, daß** das Verriegelungsteil (54) im Montagezustand in der Ausnehmung (22) des Aufnahmeteiles (2) zwischen dem Basisteil (50) und dem Einsatzteil (52) gehalten ist.

14. Steckkupplung nach einem oder mehreren der Ansprüche 2 bis 13,
**dadurch gekennzeichnet, daß** das Trägerelement (26) auf seiner der Rastkante (24) radial zugekehrten Seite schlitzartige Öffnungen aufweist, die von den Rastelementen (28, 30) zum Hintergreifen der Rastkante (24) infolge einer radial nach innen gerichteten Bewegung der Rastelemente (28, 30) bereichsweise durchgriffen werden, wobei sowohl in der Vorraststellung als auch in der Vollraststellung die radial nach außen gerichtete Rückbewegung der Rastelemente (28, 30) in der gesperrten Position durch den Verriegelungsabschnitt (33a, 33b) begrenzt wird.

15. Steckkupplung nach einem oder mehreren der Ansprüche 2 bis 14,
**dadurch gekennzeichnet, daß** die Rastelemente (28, 30) aus Kunststoff oder Metall, insbesondere aus Federstahl bestehen.

16. Steckkupplung nach einem oder mehreren der Ansprüche 1 bis 14,
**dadurch gekennzeichnet, daß** das Halteelement (20) in der, insbesondere als Innenringnut ausgebildeten, innerhalb der Aufnahmeöffnung (8) des Aufnahmeteils (2) befindlichen Ausnehmung (22) sitzt und die Rastkante (24) an dem Steckerschaft (6), insbesondere als einseitige Begrenzungskante einer am Steckerschaft (6) gebildeten Außenringnut, gebildet ist.

17. Steckkupplung nach einem oder mehreren der Ansprüche 1 bis 15,
**dadurch gekennzeichnet, daß** das Halteelement (20) - insbesondere in einer Außenringnut - am Steckerschaft (6) sitzt und die Rastkante (24) in der Aufnahmeöffnung (8) des Aufnahmeteils (2) gebildet ist.

18. Steckkupplung nach einem oder mehreren der Ansprüche 1 bis 15 und/oder nach Anspruch 17,
**dadurch gekennzeichnet, daß** das Aufnahmeteil (2) aus zwei lösbar miteinander verbundenen Teilen (50, 52) besteht, wobei das eine Teil (52) die mit dem am Steckerschaft (6) gelagerten Halteelement (20) zusammenwirkende Rastkante (24) aufweist.

## Claims

1. Plug-in coupling for pressurized-fluid systems, comprising two coupling parts (2, 4), namely a receiving part (2) and a plug part (4), the plug part (4) being insertable, by means of a plug shaft (6), in such a way as to be sealed at the circumference, in a locating opening (8) of the receiving part (2) in a direction of insertion (14), and it being possible to fix it against release by means of a holding element (20) seated in a recess (22) of one coupling part (2) firstly in a partially inserted, incompletely sealed pre-latching position, and secondly in a fully inserted pressure-tight full latching position, latching elements (28, 30) of the holding element (20) each engaging behind a latching edge (24) of the other coupling part (2) to form a latching connection (28, 24; 30, 24), one latching element (28) being effective for the pre-latching position and the other latching element (30) being effective for the full latching position, **characterized in that** the holding element (20) is formed and arranged in the recess (22) of one coupling part (2) in a manner that allows motion in an axial direction relative to the direction of insertion (14) in such a way that at least the latching element (30) which is effective for the full latching position can be transferred, by means of a displacement of the holding element (20) counter to the direction of insertion (14), from an unlocked position, in which the latching connection (28, 24; 30, 24) can be released by a radial reverse motion of the latching element (30), to a locked position, in which the release of the latching connection (28, 24; 30, 24) is prevented by a locking section (33b), the location of which is fixed relative to the recess (22) and which locks the latching element (30) in a form-locking manner against the reverse motion.

2. Plug-in coupling according to Claim 1, **characterized in that** the holding element (20) comprises a carrier element (26), which is seated in the recess (22) of one coupling part (2), and two latching elements (28, 30), which are held in the carrier element (26) in a manner that allows deformation in a radially elastic manner and which are arranged axially in series.

3. Plug-in coupling according to Claim 1 or 2, **characterized in that** all the latching elements (28, 30) can be transferred from an unlocked position to a locked position by the displacement of the holding element (20) in the pre-latching position and/or in the full latching position.

4. Plug-in coupling according to one of Claims 1 to 3, **characterized in that** two locking sections (33a, 33b), which interact with the latching element (28, 30) and are arranged in a fixed location relative to the recess (22), are provided for the form-locking prevention of the release of the latching connection.

5. Plug-in coupling according to one of Claims 2 to 4, **characterized in that** the carrier element (26) is designed as an annular body with two receiving spaces (32), in particular slot-type spaces, for the latching elements (28, 30).

6. Plug-in coupling according to one of Claims 2 to 5, **characterized in that** the carrier element (26) is formed as a one-piece shaped part, preferably from plastic, the latching elements (28, 30) and the receiving spaces (32) being designed in such a way that the latching elements (28, 30) can be inserted into the receiving spaces (32) transversely to the axis of the annular body.

7. Plug-in coupling according to one or more of Claims 1 to 6, **characterized in that** the receiving part (2) comprises at least two parts (50, 52), which are connected releasably to one another and, between them, delimit the recess (22) that receives the holding element (20).

8. Plug-in coupling according to one of Claims 4 to 7, **characterized in that** the locking section (33a, 33b) is part of the coupling part (2), in particular of the insert (52) of the receiving part (2), in which the recess (32) is situated.

9. Plug-in coupling according to Claim 8, **characterized in that** the recess (22) is embodied at least in part as a shaped hole in the receiving part (2), the locking sections (33a, 33b) being axially staggered sections of the shaped hole, each with a reduced diameter relative to the maximum diameter of the shaped hole, and regions (38, 42) which have an enlarged diameter compared with the locking sections (33a, 33b) and are each situated behind the locking sections (33a, 33b) in the direction of insertion (14) of the plug (4) being provided in the recess (22).

10. Plug-in coupling according to one of Claims 4 to 7, **characterized in that** at least one locking section (33b) is part of a separate locking part (54), in particular an annular part composed of plastic.

11. Plug-in coupling according to Claim 10, **characterized in that** all the locking sections (33a, 33b) are parts of the separate locking part (54).

12. Plug-in coupling according to Claim 10 or 11, **characterized in that** the locking part (54) can be fastened to the coupling part (2) having the recess (22), in particular to the insert (52) of the receiving part (2), by a releasable connection.

13. Plug-in coupling according to Claim 10 or 11, **characterized in that**, once installed in the recess (22) of the receiving part (2), the locking part (54) is held between the base part (50) and the insert (52).

14. Plug-in coupling according to one or more of Claims 2 to 13, **characterized in that**, on its side radially facing the latching edge (24), the carrier element (26) has slot-type openings, through which the latching elements (28, 30) reach over a certain area, owing to a radially inward motion of the latching elements (28, 30), to engage behind the latching edge (24), the radially outward reverse motion of the latching elements (28, 30) being limited in the locked position by the locking section (33a, 33b), both in the pre-latching position and in the full latching position.

15. Plug-in coupling according to one or more of Claims 2 to 14, **characterized in that** the latching elements (28, 30) are composed of plastic or metal, in particular spring steel.

16. Plug-in coupling according to one or more of Claims 1 to 14, **characterized in that** the holding element (20) is seated in the recess (22), which is situated within the locating opening (8) of the receiving part (2) and is, in particular, designed as an inner annular groove, and the latching edge (24) is formed on the plug shaft (6), in particular as a boundary edge on one side of an outer annular groove formed on the plug shaft (6).

17. Plug-in coupling according to one or more of Claims 1 to 15, **characterized in that** the holding element (20) is seated on the plug shaft (6) - in particular in an outer annular groove - and the latching edge (24) is formed in the locating opening (8) of the receiving part (2).

18. Plug-in coupling according to one or more of Claims 1 to 15 and/or according to Claim 17, **characterized in that** the receiving part (2) comprises two parts (50, 52), which are connected releasably to one another, one part (52) having the latching edge (24) interacting with the holding element (20) mounted on the plug shaft (6).

## Revendications

1. Raccord à emboîtement pour systèmes de fluides sous pression, comprenant deux parties d'accouplement (2, 4), à savoir une partie logement (2) et une partie à emboîter (4), la partie à emboîter (4) pouvant être emboîtée dans une direction d'emboîtement (14) avec un corps d'emboîtement (6) de manière étanche sur sa périphérie dans une ouverture de réception (8) de la partie logement (2) et être bloquée pour empêcher la séparation par l'intermédiaire d'un élément de retenue (20) situé dans un évidement (22) d'une partie d'accouplement (2), dans une position de préblocage avec emboîtement partiel et étanchéité incomplète, d'une part, et dans une position de blocage complet avec emboîtement total et étanchéité à la pression complète, d'autre part, des éléments de blocage (28, 30) de l'élément de retenue (20) dans les deux positions de blocage s'engageant derrière une arête de blocage (24) de l'autre partie d'accouplement (4) en formant une liaison de blocage (28, 24 ; 30, 24), l'un des éléments de blocage (28) étant actif pour la position de préblocage et l'autre élément de blocage (30) étant actif pour la position de blocage complet, **caractérisé en ce que** l'élément de retenue (20) est conçu et disposé dans l'évidement (22) d'une partie d'accouplement (2) de manière mobile dans le sens axial relativement à la direction d'emboîtement (14), de façon qu'au moins l'élément de blocage (30) actif pour la position de blocage complet puisse passer, par un déplacement de l'élément de retenue (20) en sens inverse de la direction d'emboîtement (14), d'une position non bloquée, dans laquelle la liaison de blocage (28, 24; 30, 24) peut être supprimée par un déplacement en arrière dans le sens radial de l'élément de blocage (30), à une position bloquée, dans laquelle la suppression de la liaison de blocage (28, 24 ; 30, 24) est entravée par un segment de verrouillage (33b) fixe par rapport à l'évidement (22), bloquant l'élément de blocage (30) de manière solidaire avec correspondance de forme pour empêcher le déplacement en arrière.

2. Raccord à emboîtement selon la revendication 1, **caractérisé en ce que** l'élément de retenue (20) comprend un élément support (26) situé dans l'évidement (22) d'une partie d'accouplement (2) et deux éléments de blocage (28, 30) disposés l'un derrière l'autre dans le sens axial et maintenus dans l'élément support (26) de manière à pouvoir se déformer de manière élastique dans le sens radial.

3. Raccord à emboîtement selon la revendication 1 ou 2, **caractérisé en ce que** tous les éléments de blocage (28, 30), dans la position de préblocage et/ou dans la position de blocage complet, peuvent passer d'une position non bloquée à une position bloquée par le déplacement de l'élément de retenue (20).

4. Raccord à emboîtement selon l'une des revendications 1 à 3, **caractérisé en ce qu'**il est prévu, pour entraver de manière solidaire avec correspondance de forme la suppression de la liaison de blocage, deux segments de verrouillage (33a, 33b) coopérant avec l'élément de blocage (28, 30) et disposés de manière fixe par rapport à l'évidement (22).

5. Raccord à emboîtement selon l'une des revendications 2 à 4, **caractérisé en ce que** l'élément support (26) est conçu comme un corps annulaire avec deux espaces de logement (32), en particulier en forme d'encoches, pour les éléments de blocage (28, 30).

6. Raccord à emboîtement selon l'une des revendications 2 à 5, **caractérisé en ce que** l'élément support (26) est formé comme une pièce moulée d'une seule partie, de préférence en matière plastique, les éléments de blocage (28, 30) et les espaces de logement (32) étant formés de telle façon que les éléments de blocage (28, 30) puissent s'insérer dans les espaces de logement (32) transversalement à l'axe du corps annulaire.

7. Raccord à emboîtement selon une ou plusieurs des revendications 1 à 6, **caractérisé en ce que** la partie logement (2) comprend au moins deux pièces (50, 52) reliées entre elles de manière séparable qui délimitent entre elles l'évidement (22) logeant l'élément de retenue (20).

8. Raccord à emboîtement selon l'une des revendications 4 à 7, **caractérisé en ce que** le segment de verrouillage (33a, 33b) fait partie de la partie d'accouplement (2), en particulier de la pièce d'insertion (52) de la partie logement (2) dans laquelle se trouve l'évidement (22).

9. Raccord à emboîtement selon la revendication 8, **caractérisé en ce que** l'évidement (22) est réalisé au moins partiellement comme un trou moulé dans la partie logement (2), les segments de verrouillage (33a, 33b) étant des segments du trou moulé décalés l'un par rapport à l'autre dans le sens axial et ayant chacun un diamètre réduit par rapport au diamètre maximal du trou moulé, et **en ce qu'**il est prévu, dans l'évidement (22), des zones (38, 42) de diamètre supérieur par rapport aux segments de verrouillage (33a, 33b), situées derrière les segments de verrouillage (33a, 33b) dans le sens de l'emboîtement (14) de la partie à emboîter (4).

10. Raccord à emboîtement selon l'une des revendications 4 à 7, **caractérisé en ce qu'**au moins un segment de verrouillage (33b) fait partie d'une pièce de verrouillage séparée (54), en particulier d'une pièce annulaire en matière plastique.

11. Raccord à emboîtement selon la revendication 10, **caractérisé en ce que** tous les segments de verrouillage (33a, 33b) font partie de la pièce de verrouillage séparée (54).

12. Raccord à emboîtement selon la revendication 10 ou 11, **caractérisé en ce que** la pièce de verrouillage (54) peut être fixée, par l'intermédiaire d'une liaison séparable, sur la partie d'accouplement (2) présentant l'évidement (22), en particulier sur la pièce d'insertion (52) de la partie logement (2).

13. Raccord à emboîtement selon la revendication 10 ou 11, **caractérisé en ce que** la pièce de verrouillage (54) est maintenue en position de montage dans l'évidement (22) de la partie logement (2) entre la pièce de base (50) et la pièce d'insertion (52).

14. Raccord à emboîtement selon une ou plusieurs des revendications 2 à 13, **caractérisé en ce que** l'élément support (26) présente, sur sa face tournée dans le sens radial vers l'arête de blocage (24), des ouvertures en forme d'encoches, qui sont traversées par endroits par les éléments de blocage (28, 30) pour s'engager derrière l'arête de blocage (24) par suite d'un déplacement des éléments de blocage (28, 30) vers l'intérieur dans le sens radial, le déplacement en arrière des éléments de blocage (28, 30) vers l'extérieur dans le sens radial étant limité, en position bloquée, dans la position de préblocage ainsi que dans la position de blocage complet, par le segment de verrouillage (33a, 33b).

15. Raccord emboîtable selon une ou plusieurs des revendications 2 à 14, **caractérisé en ce que** les éléments de blocage (28, 30) sont en matière plastique ou en métal, en particulier en acier pour ressorts

16. Raccord à emboîtement selon une ou plusieurs des revendications 1 à 14, **caractérisé en ce que** l'élément de retenue (20), est situé dans l'évidement (22), formé en particulier comme une rainure annulaire intérieure, se trouvant à l'intérieur de l'ouverture de réception (8) de la partie logement (2) et **en ce que** l'arête de blocage (24) située sur le corps d'emboîtement (6) est formée en particulier comme une arête de délimitation unilatérale d'une rainure annulaire extérieure formée sur le corps d'emboîtement (6).

17. Raccord à emboîtement selon une ou plusieurs des revendications 1 à 15, **caractérisé en ce que** l'élément de retenue (20) est situé sur le corps d'emboîtement (6), en particulier dans une rainure annulaire extérieure, et l'arête de blocage (24) est formée dans l'ouverture de réception (8) de la partie logement (2).

18. Raccord à emboîtement selon une ou plusieurs des revendications 1 à 15 et/ou la revendication 17, **caractérisé en ce que** la partie logement (2) comprend deux pièces (50, 52) reliées entre elles de manière séparable, l'une des pièces (52) présentant l'arête de blocage (24) coopérant avec l'élément de retenue (20) situé sur le corps d'emboîtement (6).
